# EUROPEAN PATENT APPLICATION

(11) **EP 4 273 786 A1**
(43) Date of publication of application: **08.11.2023**
(21) Application number: 22172095.6
(22) Date of filing: 06.05.2022
(51) Int. Cl.: G06Q 50/28, B31F 5/00

(54) **A PACKAGE TRACKING MONITORING DEVICE**

(71) Applicant: Controlant hf., 201 Kopavogur (IS)
(72) Inventor: Bjartmarz, Agnar, Thor, 105 Reykjavik (IS)
(74) Representative: Inspicos P/S

(57) **Abstract**

A method of manufacturing package tracking device (300) configured to at least track position an asset (313) contained in the package device while transporting the asset from an origin location to a destination location, comprising:
• providing pre-formed un-folded material (220), the pre-formed un-folded material comprising plurality of sections (201) separated via scorings (210),
• associating a communication module (202) to one of the sections,
• associating a power source (206) to one of the sections,
• associating a processor (204) to one of the sections, where the processor is configured to control the communication module and the power source,
wherein the method further comprises:
• folding the un-folded material together such that it forms an outer shape of the package device (300) having the storage medium, the communication module, the power source and the processor located within two or more separate sections, connecting the communication module, the power source, and the processor together.

## Description

### FIELD OF THE INVENTION

The present invention relates to a method of manufacturing package tracking device and to a package trackage monitoring device configured to at least track position of an asset contained in the package device while transporting the asset from an origin location to a destination location.

### BACKGROUND OF THE INVENTION

With the expansion and growth of global sourcing in a supply chain, more prevalent interest has been placed on automatic monitoring of time, position, and of environment related parameters to increase food and drug safety and improve food defense systems throughout all areas of production, processing, storage, transportation and operations. Food and drug require proper handling of environment related parameters such as temperature during transport to assure shelf quality, longevity, and safety.

Logger devices are electronic monitoring devices commonly used for these purposes, namely, to be associated to assets such as food, beverages or drugs to automatically monitor and record various environmental related parameters of the assets throughout a supply chain, such as temperature, humidity, acceleration, position, and air pressure, over time. A recent example of importance of such logger devices is the temperature monitoring of the COVID-19 vaccines, which is a key critical monitoring parameter.

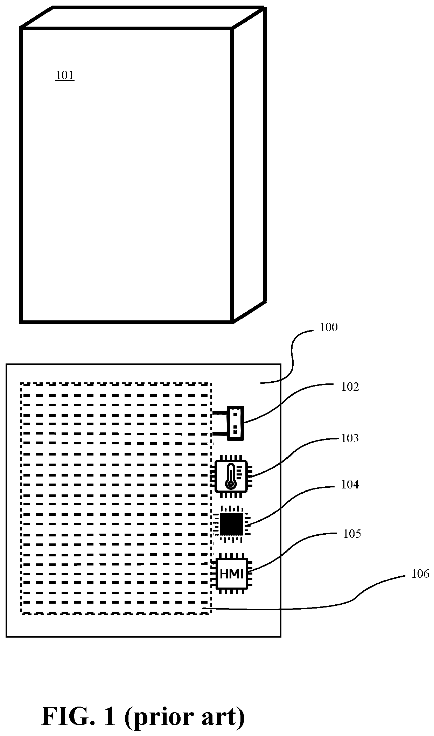

Some development has taken place in the past years in developing thin and compact logger devices, sometimes referred to as smart labels. These labels are thin and flexible having thickness in the millimeter range or even less. These labels are configured to be attached to packages such as a box 101 as shown here. Figure 1 depicts graphically such a label device 100 having communication module 102, a sensor 103 for e.g., measuring temperature of the asset, a processor 104, a memory 105 and a flexible battery 106 which is the largest component as illustrated here. These labels are capable of monitoring environmental related parameter of the asset in real time by transmitting on a regular basis the position of the smart label together with measured environmental related parameter such as the temperature, humidity, light intensity etc. on a regular basis, such as every hour, every 6 hours, every 12 hours, depending various parameters such as the type of transport, the sensitivity of the asset.

The size of the flexible battery 106 is commonly around 10-15cm ^{∗} 10-15cm, but this areal size is because of the large areal size needed for sufficient capacity of the ultra-thin battery which may be made of zinc containing anode, a cathode based on a metal oxide such as manganese oxide as disclosed in WO2021/130345, or any type of electrochemical cells such as the one in US2020373628 and EP3912202. This size may be reduced at the cost of the battery size and the capacity, but requirements from suppliers is that the battery lifetime is at least several weeks or must be capable of providing certain number of transmissions.

This areal size limits the application of the smart label to the packages that have at least a side of the label dimension, which is not the case in the scenario depicted here, where the largest areal of the box 101 is below this dimension, whereby folding the label too much will result in destroying the battery.

### SUMMARY OF THE INVENTION

It is an object of embodiments of the invention to provide an improved alternative of such a smart label or smart label like concept where the geometrical dimension of the package is no longer a limiting factor.

In general, the invention preferably seeks to mitigate, alleviate or eliminate one or more of the above-mentioned disadvantages of the prior art singly or in any combination. In particular, it may be seen as an object of embodiments of the present invention to provide a method and a wireless logger/tracking device that solves the above-mentioned problems, or other problems.

To better address one or more of these concerns, in a first aspect of the invention a method is provided for manufacturing package tracking device configured to at least track position of an asset contained in the package device while transporting the asset from an origin location to a destination location, comprising:
- providing pre-formed un-folded material, the pre-formed un-folded material comprising plurality of sections providing pre-formed un-folded material, the pre-formed un-folded material comprising plurality of sections separated via scorings,
- associating a communication module to one of the sections,
- associating a power source to one of the sections,
- associating a processor to one of the sections, where the processor is configured to control the communication module and the power source,
wherein the method further comprises:
- folding the un-folded material together such that it forms an outer shape of the package device having the storage medium, the communication module, the power source and the processor located within two or more separate sections,
- connecting the storage medium, the communication module, the power source, and the processor together.

In an embodiment, the method further comprises:
associating a sensor to one of the sections where the sensor is configured to detect an environment related parameter of the asset, and
associating a storage medium to one of the sections configured to store the detected environmental related parameter.

In an embodiment, the power source comprises a battery where the step of associating a power source to one of the sections includes printing the battery directly onto one or more separate sections of the pre-formed un-folded material separated via the scorings

In an embodiment, the printed battery may extend over two or more sections including the scorings between these sections, if the scorings have a sufficiently large bending radius that does not damage the battery. In another embodiment, the battery may be attached to the pre-formed un-folded material via e.g. adhesive layer.

Accordingly, instead of utilizing two-dimensional flat label having areal that may be larger than the largest areal of the outer shape of the package device, the individual components of the tracking device may be divided onto two or more sections that are separated via the scorings such that when folded together the resulting package device acts as a smart-package device, where the size of the battery may be distributed on one, two or more outer sections of the package and thus, the necessary battery power may be provided for the resulting package device. The processor, the storage medium, the communication module and optionally the sensor are compact and commonly in the range of being several millimeters thick, and e.g. around 10-20mm long/diameter.

In an embodiment, the conductive wire is printed directly onto the pre-formed un-folded material or photo plotted directly on the flexible printed circuit board.

In an embodiment, the step of associating the storage medium, the communication module, the power source, and the processor and optionally the sensor to the sections comprises attaching such as via adhesive layer the sensor, the storage medium, the communication module, the power source, and the processor to the sections. Accordingly, a prefabricated power source and other components may be distributed onto different sections and subsequently connected together.

In an embodiment, the step of folding the pre-formed un-folded material together further includes associating sealing agents at boundaries where free end portions of the sections meet when folding the pre-formed un-folded material together. In an embodiment, the sealing agents comprise a sensing circuit configured to sense when the sealing agents are ripped. Thus, these boundaries are typically the boundaries that are opened when the package device is opened, therefore, it is ensured that opening the package device triggers a signal indicating that the package device has been opened. The sensing circuit is preferably connected to the power source, where preferably low current flows through the circuit such that upon ripping the circuit, the change in the electrical current may be sensed by e.g. the processor that triggers the signal. This important information are valuable regarding inventory status of the asset, which may be any type of pharmaceutical product, in real time.

The sealing agents may in another embodiment include all types of circuits or sensors capable of sensing this, e.g. using capacitor technology whereby ripping the sealing agent(s) causes an change in capacitance.

In one embodiment, the associated power source is an unactive power source, where upon transferring the power source to an active stage the package device acts as an active package monitoring device.

In an embodiment, the outer shape of the package device is box like and where the sections are two-dimensional flat sections. The outer shape should of course not be construed as being limited to the box like shape, it may e.g. also be cylindrical shaped, where e.g. the cylindrical side portion may forms the flexible battery discussed previously, and where e.g. the top and/or bottom part of the cylinder forms the remaining part of the smart package device.

In an embodiment, the method further comprises, prior to folding the preformed un-folded material together, covering the battery, the storage medium, the communication module, the power source and the processor and optionally the sensor with a further material such as identical to the pre-formed un-folded material. Thus, by "shielding" the electrical components a sufficient protection for the package device is provided.

The pre-formed un-folded material comprising plurality of sections separated via scorings may according to the present invention be understood as no electrical connections are provided between all or at least some of the sections.

In an embodiment, the preformed un-folded material comprises cardboard, or any type of plastic material.

In another embodiment, the pre-formed un-folded material comprises a flexible Printed Circuit Board (PCB) material. Accordingly, at least some of the electrical components may already be produced on the PCB material.

According to a second aspect of the invention a package tracking device is provided configured to at least track position an asset contained in the package device while transporting the asset from an origin location to a destination location, comprising:
- a communication module configured to communicate the position data of the package tracking device with an external computer device,
- a power source,
- a processor configured to control the storage medium, the communication module, the power source via an electrical circuit,

wherein the package is formed from a preformed un-folded material comprising plurality of sections separated via scorings such that when folded together the package contains multiple of sections separated by the scorings and boundaries where free end portions of the sections meet when folding the preformed un-folded material together,
wherein the the communication module, the power source and the processor are located within two or more separate sections and connected together via electrical circuit.

The power source may be a battery, preferably an ultra-thin battery, which may be made of zinc containing anode, a cathode based on a metal oxide such as manganese oxide, or any type of electrochemical cells. The battery may in an embodiment be battery printed directly onto one or more separate sections of the pre-formed un-folded material.
In an embodiment, the package tracking device further comprises at least one sensor such as a temperature sensor, humidity sensor, light sensor, accelerometer, configured to detect an environment related parameter associated to the asset, where the at least one sensor is selected from one or more of: temperature sensor, humidity sensor, barometer, accelerometer, and a storage medium configured to store the detected environment related parameter.

In an embodiment, the boundaries where free end portions of the sections meet when folding the preformed un-folded material together are sealed with the sealing agents, where the sealing agents comprise a sensing circuit configured to sense when the sealing agents are ripped.

In an embodiment, the sensor, the storage medium, the communication module, the power source and the processor are facing inwards of the package monitoring device.

The package tracking device according to the present invention may in one embodiment be configured to track the position of the package tracking device and of the asset. The position may as an example be determined using cellular network triangulation method where the communication module, via e.g. modem, connects to the cellular network.

In another embodiment, the package tracking device may further be required to additionally monitor at least one environmental related parameter of the asset, such as the temperature, humidity etc., where the memory is then configured to store the measured environmental related data, the may e.g. be measured every 10 minutes, and where upon connecting to the cellular network the stored measurement data is additionally transmitted together with the position data of the package tracking device.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 depicts an example of prior art smart label, and
Figures 2 and 3 depict schematically an embodiment of a package tracking device,

### DESCRIPTION OF EMBODIMENTS

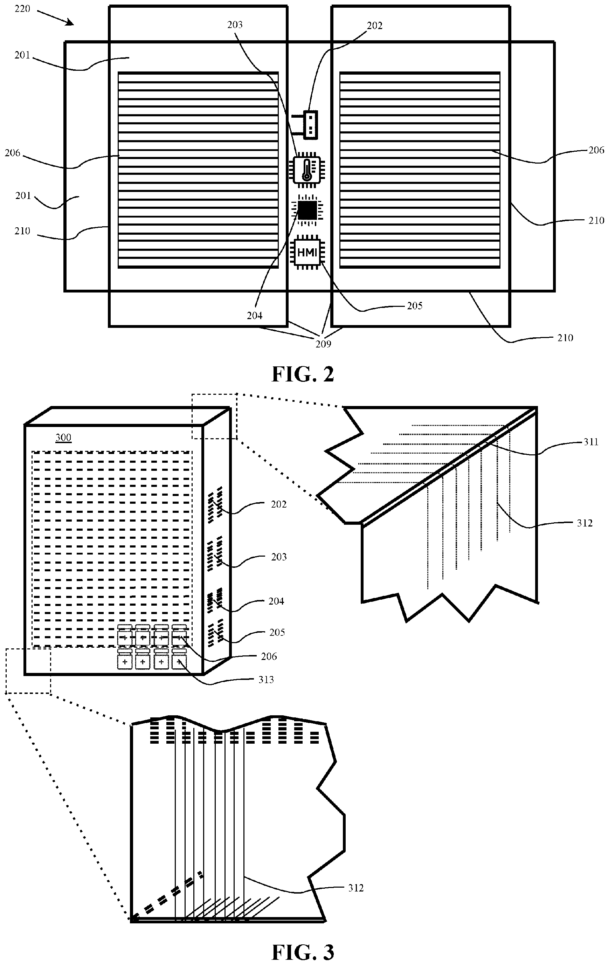

Figures 2 and 3 depicts schematically a package tracking device according to the present invention.

Figure 2 shows a pre-formed un-folded material 220 having plurality of sections 201 separated via scorings 210, where the plurality of sections further contains free end portions 209. Two or more of the sections 201 have associated a communication module 202, a power source 206, a processor 204 and optionally a storage medium 205 and a sensor device 203.

The power source shown here is a flexible battery which may be made of zinc containing anode, a cathode based on a metal oxide such as manganese oxide as disclosed in WO2021/130345, or any type of electrochemical cells such as the one in US2020373628 and EP3912202. Having the battery on just one side might result in that the battery lifetime may not be sufficiently high but being able to distribute the battery on two such sections as shown in this embodiment, the battery lifetime become sufficiently high.

The storage medium 205, communication module 202, a power source 206, a processor 204 and optionally a sensor device 203 are connected via electrical circuit (not shown) to the battery where the electrical circuit may extend above the scorings 210.

Figure 3 shows when the un-folded material 201 has together such that it forms an outer shape of the package tracking device, in this case having a box shape 300, which may also be referred to as smart-package, contains the storage medium 205, the communication module 202, the power source 206, the sensor 203 and the processor 204 located within two or more separate sections, or as shown here, the battery is distributed onto two sections whereas the remaining components are position within one and the same section. The total size of the battery, after distributing it in this way, makes it sufficient for this package size to enable the smart box 300 to have a sufficient battery lifetime for the smart box.

Such a package tracking device configured to carry asset placed within the package tracking device, but this asset may be any type of product, such as food product or medicine 312, where there is a need to track at least the position of the asset while transporting the asset from an origin location to a destination location, while regularly, e.g. every hour, transmit by the communication module the position of the package tracking device and thus the position of the asset to an external computer device. This is sometimes referred to as a real-time position tracking, which may be suitable in a so-called "last mile" transport, meaning the final distribution of the asset to multiple of locations, e.g. pharmacies in a city. The communication module may comprise a modem that connects to a cellular network when transmitting position data of the package tracking device, where the position data may as an example be based on cellular triangulation technique.

In other scenarios, it may further be desired to monitor environmental condition of the asset such as the temperature, the humidity, the acceleration, the pressure difference, the light intensity etc., where in such situations one or more sensors, such as temperature sensor, humidity sensor, accelerometer, barometer, light sensor, or a combination thereof may be incorporated onto one or more of the sections. This sensor data will thus also be transmitted with the position of the package tracking device so that position data and e.g. temperature of the asset or around the asset is transmitted to the external computer.

The pre-formed un-folded material may be any type of material, such as, but not limited to, cardboard, plastic material.

The battery may comprise a where the step of associating a power source to one of the sections includes printing the battery directly onto one or more separate sections of the preformed un-folded material.

The electrical circuit may further be printed directly onto the pre-formed un-folded material 201.

The storage medium, the communication module, the power source, and the processor to the sections comprises attaching such as via adhesive layer the storage medium, the communication module, the power source, and the processor to the sections.

Figure 3 further depicts an embodiment where the sealing agents at boundaries where free end portions of the sections meet when folding the pre-formed un-folded material together and where the sealing agents comprise a sensing circuit 312 configured to sense when the sealing agents are ripped. This may be based on running a low current through the sensing circuit where upon opening the package tracking device the sensing circuit 312 is ripped and where voltage change is sensed by the processor that triggers a signal indicating that the package tracking device has been opened. This may be relevant to monitor the inventory status of the asset.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method of manufacturing package tracking device (300) configured to at least track position an asset (313) contained in the package device while transporting the asset from an origin location to a destination location, comprising:
• providing pre-formed un-folded material (220), the pre-formed un-folded material comprising plurality of sections (201) separated via scorings (210),
• associating a communication module (202) to one of the sections,
• associating a power source (206) to one of the sections,
• associating a processor (204) to one of the sections, where the processor is configured to control the communication module and the power source,
wherein the method further comprises:
• folding the un-folded material together such that it forms an outer shape of the package device (300) having the storage medium, the communication module, the power source and the processor located within two or more separate sections,
• connecting the storage medium, the communication module, the power source, and the processor together.

2. The method according to claim 1, further comprising:
associating a sensor to one of the sections where the sensor is configured to detect an environment related parameter of the asset, and
associating a storage medium (205) to one of the sections, where the storage medium is configured to store the detected environmental related parameter.

3. The method according to claim 1 or 2, wherein the power source comprises a battery where the step of associating a power source to one of the sections includes printing the battery directly onto one or more separate sections of the pre-formed un-folded material.

4. The method according to any of the preceding claims, wherein the conductive wire is printed directly onto the pre-formed un-folded material.

5. The method according to any of the preceding claims, wherein the step of associating the storage medium, the communication module, the power source, the processor and preferably the sensor and the storage medium to the sections comprises attaching such as via adhesive layer the storage medium, the communication module, the power source, the processor to the sections and preferably the sensor and the storage medium.

6. The method according to any of the preceding claims, wherein the step of folding the preformed un-folded material together further includes associating sealing agents at boundaries where free end portions of the sections meet when folding the pre-formed un-folded material together.

7. The method according to claim 6, wherein the sealing agents comprise a sensing circuit configured to sense when the sealing agents are ripped.

8. The method according to any of the preceding claims, wherein the associated power source is an unactive power source, where upon transferring the power source to an active stage the package device acts as an active package monitoring device.

9. The method according to any of the preceding claims, wherein the outer shape of the package device is box like and where the sections are two-dimensional flat sections.

10. The method according to any of the preceding claims, further comprising, prior to folding the preformed un-folded material together, covering the storage medium, the communication module, the power source and the processor with a further material such as identical to the pre-formed un-folded material.

11. The method according to any of the preceding claims, wherein the pre-formed un-folded material comprises a flexible Printed Circuit Board (PCB) material.

12. A package tracking device (300) configured to at least track position an asset (313) contained in the package device while transporting the asset from an origin location to a destination location, comprising:
• a communication module (202) configured to communicate the position data of the package tracking device with an external computer device,
• a power source (206),
• a processor (204) configured to control the storage medium, the communication module, the power source via an electrical circuit,
wherein the package is formed from a preformed un-folded material (220) comprising plurality of sections (201) separated via scorings (210) such that when folded together the package contains multiple of sections separated by the scorings and boundaries where free end portions of the sections meet when folding the preformed un-folded material together,
wherein the communication module, the power source and the processor are located within two or more separate sections and connected together via electrical circuit.

13. The package tracking device according to claim 12, further comprising at least one sensor (203) configured to detect an environment related parameter associated to the asset, where the at least one sensor is selected from one or more of: temperature sensor, humidity sensor, barometer, accelerometer, and a storage medium (205) configured to store the detected environment related parameter.

14. The package tracking device according to any of the claims 11 to 13, wherein boundaries where free end portions (209) of the sections meet when folding the preformed un-folded material together are sealed with the sealing agents, where the sealing agents comprise a sensing circuit configured to sense when the sealing agents are ripped.

15. The package tracking device according to any of the claims 12 to 14, wherein the sensor, the storage medium, the communication module, the power source and the processor are facing inwards of the package monitoring device.
